Europäisches Patentamt

(19) European Patent Office

Office européen des brevets

(11) Numéro de publication: **0 079 287**
**B1**

(12) **FASCICULE DE BREVET EUROPEEN**

(45) Date de publication du fascicule du brevet: **02.09.87**

(51) Int. Cl.⁴: **G 01 V 3/10**, G 01 V 3/36

(21) Numéro de dépôt: **82402048.1**

(22) Date de dépôt: **08.11.82**

(54) **Dispositif de mesure de caractéristique électrique relative aux premières couches du sous-sol.**

(30) Priorité: **06.11.81 FR 8120872**

(43) Date de publication de la demande:
**18.05.83 Bulletin 83/20**

(45) Mention de la délivrance du brevet:
**02.09.87 Bulletin 87/36**

(84) Etats contractants désignés:
**AT BE CH DE FR GB IT LI LU NL SE**

(56) Documents cités:
**CH-A- 361 056**
**FR-A- 971 270**
**US-A-3 549 985**
**US-A-3 828 242**
**US-A-4 042 876**
**US-A-4 255 711**
**US-A-4 263 553**
**FUNKSCHAU, no. 14, juillet 1981, pages 50-54,
München (DE); W.P. TANGERMANN:
"Metallsuchgeräte".**

**WIRELESS WORLD, vol. 83, no. 1496, avril
1977, pages 45-48, Haywards Heath, Sussex
(GB); D.E.O'N. WADDINGTON: "Metal
detector".**

(73) Titulaire: **ETAT FRANCAIS représenté par Le
Ministère de l'Urbanisme et du Logement
LABORATOIRE CENTRAL DES PONTS ET
CHAUSSEES
58 boulevard Lefebvre
F-75732 Paris Cedex 15 (FR)**

(72) Inventeur: **Lagabrielle, Richard Jean
2, rue de l'Ilette
F-44680 Sainte Pazanne (FR)**
Inventeur: **Grolleau, Bernard Pierre
16, rue Alsace Lorraine
F-44400 Reze (FR)**
Inventeur: **Lafont, René Jean
1, rue Charles de Gaulle
F-44340 Bouguenais (FR)**

(74) Mandataire: **Joly, Jean-Jacques et al
CABINET BEAU DE LOMENIE 55, rue
d'Amsterdam
F-75008 Paris (FR)**

## Description

La présente invention concerne la mesure de caractéristique électrique relative aux premières couches du sous-sol.

Pour effectuer une telle mesure, on connaît des appareils de type comportant une bobine émettrice, un générateur fournissant un courant à la bobine émettrice pour engendrer un champ électromagnétique, une bobine réceptrice, et des moyens récepteurs reliés à la bobine réceptrice pour recevoir un signal représentatif de l'amplitude de la composante perpendiculaire au plan de la bobine réceptrice du champ produit par la bobine émettrice et fournir un signal de mesure de la caractéristique électrique à mesurer.

Certains de ces appareils connus utilisent le champ électromagnétique provenant d'émetteurs de radiodiffusion; il se pose alors un problème d'orientation des capteurs par rapport à la direction des émetteurs; de plus, l'on ne peut maîtriser le volume de terrain exploré. D'autres appareils connus utilisent une boucle émettrice et une boucle réceptrice mais ne permettent ni un enregistrement continu de la mesure, ni une limitation de l'exploration aux premières couches du sous-sol (épaisseur métrique à décamétrique) avec une précision satisfaisante du fait des très basses fréquences utilisées. Pour permettre une auscultation rapide et continue des premières couches du sous-sol, il a été proposé des appareils du type précité dans lesquels la bobine émettrice et la bobine réceptrice sont disposées dans un support de façon à pouvoir être déplacées en continu à la surface du sol tout en conservant une même disposition relative l'une par rapport à l'autre.

De tels appareils sont notamment décrits dans le document US—A—3 549 985 et dans un article de W. Tangerman paru dans le No 14, juillet 1981, pages 50 à 54 de la publication "Funkschau" (Munchen, RFA). Toutefois, ces appareils sont conçus pour détecter la présence d'objets métalliques enfouis à faible profondeur dans le sol.

Or, il est souhaitable aussi de pouvoir disposer d'une technique simple permettant une mesure rapide et continue de la constante diélectrique apparente des premières couches du sous-sol, c'est-à-dire environ entre 1 et 10 mètres de profondeur, afin, par exemple, de réaliser une détection rapide et continue de zones d'accumulation d'eau dans le corps de chaussées routières, ou de zones hétérogènes en prévision de travaux de terrassement.

Cet objectif est atteint du fait que, conformément à l'invention, la bobine émettrice est alimentée par un générateur qui fournit un courant de fréquence comprise entre 10 MHz et 100 MHz, les bobines émettrice et réceptrice sont noyées dans un support formé par un tapis en matériau isolant électrique résistant à l'usure par frottement et susceptible d'être trainé à la surface du sol, et les moyens récepteurs reliés à la bobine réceptrice comportent un enregistreur pour enregistrer en continu le signal de mesure de ladite constante diélectrique.

Le tapis est par exemple en caoutchouc et peut être formé de deux feuilles collées l'une à l'autre entre lesquelles sont disposées les bobines émettrice et réceptrice.

D'autres particularités et avantages du dispositif selon l'invention ressortiront à la lecture de la description faite ci-après, à titre indicatif mais non limitatif, en référence au dessin annexé sur lequel:

— la figure 1 est une vue schématique d'un dispositif de mesure selon l'invention,

— la figure 2 est une vue en coupe du tapis de mesure,

— les figures 3 et 4 illustrent la relation entre la hauteur d'eau dans un corps de chaussée et le rapport Hm/Ho entre le module de la composante verticale du champ magnétique mesuré au moyen de la bobine réceptrice et le module qui serait mesuré dans l'air loin du sol, et

— la figure 5 illustre schématiquement un corps de chaussée en coupe.

Conformément à l'invention, une bobine émettrice 10 alimentée en courant alternatif à haute fréquence et une bobine réceptrice 12 sont déplacées en continu sur la surface d'un sol S dont on désire mesurer la constante diélectrique des couches supérieures. La bobine émettrice 10 est alimentée par un générateur H.F. 11 de fréquence ajustable. La tension v induite dans la bobine réceptrice 12 par le champ électromagnétique produit par la bobine 10 est amplifiée au moyen d'un amplificateur sélectif 13 accordé sur la fréquence du courant alimentant la bobine 10. Un voltmètre H.F. 14 branché à la sortie de l'amplificateur 13 fournit une indication visuelle de l'amplitude de la tension v Un enregistreur 15 branché également à la sortie de l'amplificateur 13 permet de réaliser un enregistrement graphique continu représentant les variations de la tension v lorsque les bobines 10 et 12 sont déplacées sur le sol S. L'avance de l'enregistreur 15 est commandée par exemple par un capteur 16 mesurant la distance parcourue. Le capteur 16 peut être une roue associée à un détecteur fixe qui produit une impulsion à chaque tour de roue, par exemple un détecteur à effet Hall associé à une pièce métallique fixér sur la roue. Les impulsions produites sont utilisées pour commander le moteur d'entraînement de l'enregistreur à une vitesse proportionnelle à la fréquence de ces impulsions. En variante, l'entraînement de l'enregistreur pourra être couplé à celui du véhicule utilisé pour tracter les bobines 10 et 12.

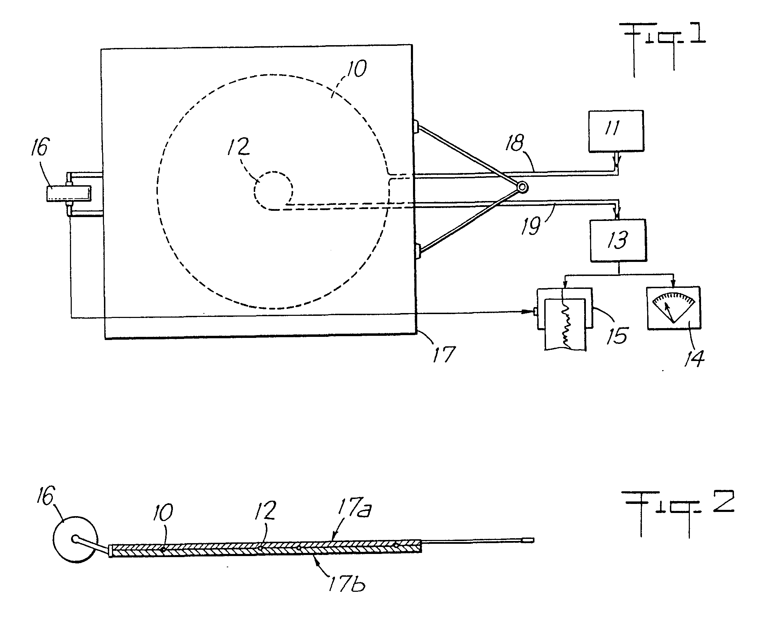

Comme on peut le voir sur la figure 2, les bobines 10 et 12 sont formées chacune par une spire, par exemple en cuivre, et sont noyées dans un tapis de caoutchouc 17 formé de deux feuilles 17a, 17b collées l'une sur l'autre et entre lesquelles sont placées les bobines. Le générateur 11, l'amplificateur 13, le voltmètre 14 et l'enregistreur 15 sont regroupés sur le véhicule tractant le tapis 17 et sont reliés aux bobines 10 et 12 par des câbles coaxiaux 18, 19.

Pour la mesure de la constante diélectrique, le générateur 11 fournit à la bobine émettrice 10 un courant alternatif de fréquence supérieure à 10 MHz et, de préférence inférieure à 100 MHz pour éviter les phénomènes de guide d'ondes. La tension v induite dans la bobine 12 est alors une fonction de la constante diélectrique du sous-sol ausculté et de la géométrie des bobines 10 et 12. En particulier, la présence d'eau dans le sous-sol se traduira par une diminution de la grandeur affichée sur le voltmètre et inscrite sur l'enregistreur. La mesure de la constante diélectrique au moyen du dispositif de l'invention trouve donc une application particulièrement avantageuse dans la détection de poches d'eau dans les corps de chaussées routières puisque cette détection peut être réalisée rapidement, en continu et avec un matériel très simple.

La grandeur mesurée est la constante diélectrique apparente des première couches du sous-sol, c'est-à-dire la constante diélectrique d'un sous-sol homogène qui conduirait au même résultat de la mesure dans les mêmes conditions (même géométrie des bobines, même fréquence du courant). Pour une géométrie et une fréquence données, la relation entre la tension v et la caractéristique à mesurer peut être établie par étalonnage dans l'air.

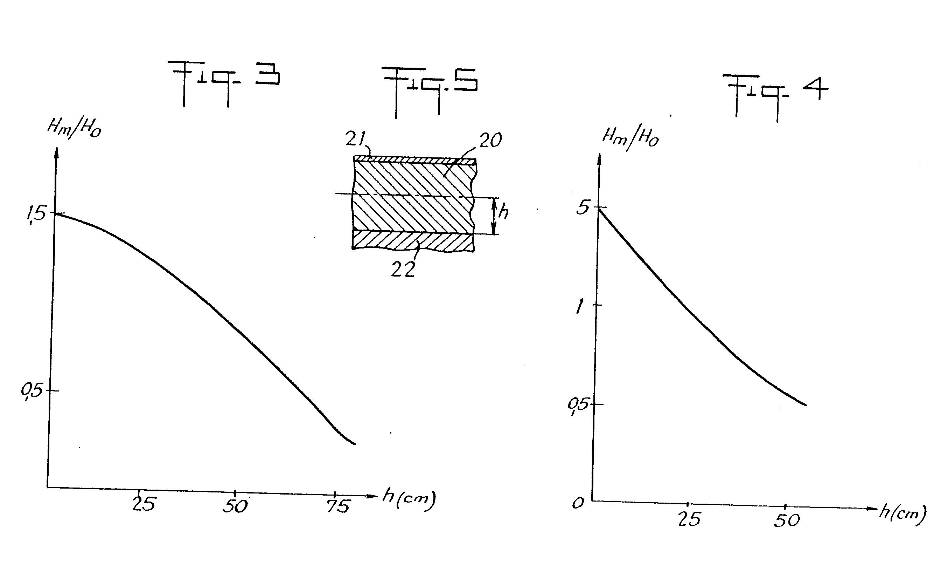

A titre d'exemple, on pourra utiliser une configuration avec bobine émettrice et réceptrice concentriques (comme illustré par les figures 1 et 2), le diamètre de la bobine émettrice 10 étant grand par rapport à celui de la bobine réceptrice 12 (c'est-à-dire au moins 5, et de préférence, au moins 10 fois supérieur au diamètre de la bobine réceptrice). Hm désignant le module de la composante verticale du champ magnétique mesuré au moyen de la bobine réceptrice et Ho celui que l'on mesurerait dans l'air loin du sol (ou dans le vide), les courbes des figures 3 et 4 illustrent, à titre d'exemple, les relations du rapport Hm/Ho avec la hauteur d'eau h dans le corps d'une chaussée 20 (figure 5) de 1 m d'épaisseur sous revêtement 21, avec des bobines émettrice et réceptrice concentriques, de diamètres respectifs égaux à 3,2 m et 0,1 m. Dans le cas de la figure 3, la fréquence du courant alimentant la bobine émettrice est égale à 64 MHz, et le substratum 22 sur lequel repose le corps de chaussée est humide. Dans le cas de la figure 4, la fréquence est égale à 45 MHz et le substratum 22 est sec.

On a envisagé ci-dessus l'application de l'invention à la détection de zones d'accumulation d'eau dans un corps de chaussée routière. Comme déjà indiqué, d'autres applications sont possibles, telles que la détection d'hétérogénéités de natures diverses (caractéristiques de la terre arable, présence de matériaux difficiles à terrasser en vue du creusement de tranchées, etc).

**Revendications**

1. Dispositif de mesure de caractéristique électrique relative aux premières couches du sous-sol, comprenant une bobine émettrice (10) et une bobine réceptrice (12) disposées dans un support (17) de façon à pouvoir être déplacées en continu à la surface du sol tout en conservant une même disposition relative l'une par rapport à l'autre, un générateur (11) fournissant un courant alternatif à la bobine émettrice (10) pour engendrer un champ électromagnétique, et des moyens récepteurs (13—15) reliés à la bobine réceptrice (12) pour recevoir un signal représentatif de l'amplitude de la composante perpendiculaire au plan de la bobine réceptrice dudit champ électromagnétique et fournir un signal de mesure de ladite caractéristique électrique, caractérisé en ce que:

— le générateur (11) fournit un signal de fréquence comprise entre 10 MHz et 100 MHz pour permettre la mesure de la constante diélectrique apparente des premières couches du sous-sol,

— les bobines émettrice (10) et réceptrice (12) sont noyées dans ledit support formé par un tapis (17) en matériau isolant électrique résistant à l'usure par frottement et susceptible d'être traîné à la surface du sol, et

— les moyens récepteurs (13—15) comportent un enregistreur (15) pour enregistrer en continu le signal de mesure de ladite constante diélectrique.

2. Dispositif de mesure selon la revendication 1, caractérisé en ce que le tapis est formé de deux feuilles (17a, 17b) collées l'une sur l'autre et entre lesquelles sont disposées les bobines émettrice (10) et réceptrice (12).

3. Utilisation du dispositif selon l'une quelconque des revendications 1 et 2 pour la détection en continu de zones d'accumulation d'eau dans des corps de chaussées routières.

**Patentansprüche**

1. Vorrichtung zur Messung einer elektrischen Eigenschaft bezüglich der ersten Schichten des Untergrundes, mit einer Senderspule (10) und einer Empfängerspule (12), die in einem Träger (17) derart angeordnet sind, daß sie kontinuierlich an der Oberfläche des Bodens bei Bewahrung einer gleichen Relativanordnung zueinander verschiebbar sind, einem Generator (11), der der Senderspule (10) einen Wechselstrom zuführt, um ein elektromagnetisches Feld zu erzeugen, und mit der Empfängerspule (12) verbundenenen Empfangsmitteln (13—15) zum Empfang eines die Amplitude der zur Ebene der Empfängerspule senkrechten Komponente des elektromagnetischen Feldes darstellenden Signals und zum Liefern eines Meßsignals der elektrischen Eigenschaft, dadurch gekennzeichnet,

daß der Generator (11) ein Signal einer Frequenz im Bereich von 10 MHz bis 100 MHz liefert, um die Messung der scheinbaren Dielektrizitätskonstante der ersten Schichten des Untergrundes zu gestatten,

die Senderspule (10) und die Empfängerspule (12) in dem aus einer Bahn (17) aus elektrisch isolierendem, gegen den Verschließ durch Reibung beständigem und auf der Oberfläche des Bodens ziehbarem Material gebildeten Träger eingebettet sind, und die Empfangsmittel (13—15) einen Schreiber (15) zum kontinuierlichen Aufzeichnen des Meßsignals der Dielektrizitätskonstante aufweisen.

2. Meßvorrichtung nach dem Anspruch 1, dadurch gekennzeichnet, daß die Bahn aus zwei Folien (17a, 17b) gebildet ist, die aufeinander geklebt sind und zwischen denen die Senderspule (10) und die Empfängerspule (12) angeordnet sind.

3. Verwendung der Vorrichtung nach irgendeinem der Ansprüche 1 und 2 zur kontinuierlichen Erfassung von Wasseransammlungszonen in den Körpern von Straßenfahrbahnen.

## Claims

1. Device for measuring an electrical characteristic relating to the first layers of the underground, comprising a transmitting coil (10) and a receiving coil (12) placed in a support (17) so as to be movable continuously on the ground surface while preserving a same relative disposition one with respect to the other, a generator (11) supplying alternating current to the transmitting coil (10) to generate an electromagnetic field, and receiving means (13—15) connected to the receiving coil (12) for receiving a signal representative of the amplitude of the component perpendicular to the plane of the receiving coil of said electromagnetic field and for supplying a signal measuring said electrical characteristic, characterized in that:

— the generator (11) supplies a signal having a frequency comprised between 10 MHz and 100 MHz permitting the measurement of the apparent dielectric constant of the first underground layers,

— the transmitting (10) and receiving (12) coils are embedded in said support formed by a covering (17) in electrical insulating material resistant to wear by friction and adapted to be drawn over the ground surface, and

— the receiving means (13—15) comprise a recorder (15) for continuously recording the signal measuring said dielectric constant.

2. Measuring device according to claim 1, characterized in that the covering is constituted of two sheets (17a, 17b) bonded one on the other and between which are placed the transmitting (10) and receiving (12) coils.

3. Use of the device according to any one of claims 1 and 2 for the continuous detection of areas of water accumulation in road constructions.

0 079 287

Fig.1

Fig.2

# Fig. 3

$H_m/H_o$

1,5

0,5

25    50    75    $h$ (cm)

# Fig. 5

21    20

$h$

22

# Fig. 4

$H_m/H_o$

5

1

0,5

0

25    50    $h$ (cm)

0 079 287